# EUROPÄISCHE PATENTSCHRIFT

(11) **EP 2 466 805 B1**
(45) Veröffentlichungstag und Bekanntmachung des Hinweises auf die Patenterteilung: **29.08.2018**
(21) Anmeldenummer: 10015714.8
(22) Anmeldetag: 16.12.2010
(51) Int. Cl.: H04L 12/46, H04L 29/08

(54) **VERFAHREN ZUR DATENÜBERTRAGUNG ZWISCHEN ZWEI TEILNEHMERN, WANDLER ZUM SENDEN UND EMPFANGEN VON DATEN UND DATENÜBERTRAGUNGSSTRECKE**
METHOD FOR TRANSMITTING DATA BETWEEN TWO PARTICIPANTS, CONVERTER FOR TRANSMITTING AND RECEIVING DATA AND DATA TRANSMISSION PATH
PROCÉDÉ DE TRANSMISSION DE DONNÉES ENTRE DEUX PARTICIPANTS, CONVERTISSEUR D'ÉMISSION ET DE RÉCEPTION DE DONNÉES ET VOIE DE TRANSMISSION DE DONNÉES

(43) Veröffentlichungstag der Anmeldung: 20.06.2012
(73) Patentinhaber: Pepperl & Fuchs GmbH, 68307 Mannheim (DE)
(72) Erfinder: Wettengel, Ilja, 12559 Berlin (DE); Waschk, Kolja, 22765 Hamburg (DE)
(74) Vertreter: Schiffer, Axel Martin

(56) Entgegenhaltungen:
- EP-A1- 1 868 109
- WO-A1-2005/074226
- WO-A2-00/70827
- US-A1- 2009 154 492

## Beschreibung

Die Erfindung bezieht sich in einem ersten Gesichtspunkt auf ein Verfahren zur Datenübertragung zwischen zwei Teilnehmern auf Grundlage des Ethernet-Standards nach dem Oberbegriff des Anspruchs 1.
In einem weiteren Aspekt betrifft die Erfindung einen Wandler zum Senden und Empfangen von Daten auf Grundlage Ethernet-Standards nach dem Oberbegriff des Anspruchs 7. Schließlich bezieht sich die Erfindung auf eine Datenübertragungsstrecke.
Bei einem gattungsgemäßen Verfahren wird ein erstes Ethernet-Signal, welches ein Wandler über einen ersten physikalischen Kanal von einem ersten Teilnehmer empfängt, von dem Wandler in ein zweites Ethernet-Signal umgewandelt, dass von dem Wandler über einen zweiten physikalischen Kanal an einen zweiten Teilnehmer gesendet wird.
Ein gattungsgemäßer Wandler weist folgende Komponenten auf: eine erste Anschlusseinrichtung zum Herstellen einer Wirkverbindung mit einem ersten physikalischen Kanal, einen ersten Empfänger, der mit der ersten Anschlusseinrichtung verbunden ist, zum Empfangen eines ersten Ethernet-Signals, eine erste Schnittstelle, die mit dem ersten Empfänger verbunden ist, zum Umwandeln des ersten Ethernet-Signals in ein zweites Ethernet-Signal, einen ersten Sender, der mit der ersten Schnittstelle verbunden ist, zum Aussenden des zweiten Ethernet-Signals auf einen zweiten physikalischen Kanal und eine zweite Anschlusseinrichtung, die mit dem ersten Sender verbunden ist, zum Herstellen einer Wirkverbindung mit dem zweiten physikalischen Kanal.
Das Ethernet-Protokoll, dessen unterschiedliche Varianten in der Norm IEEE 802.3 niedergelegt sind, wird sehr häufig auch in industriellen Umgebungen verwendet.

Insbesondere kommt dabei das sogenannte "Fast-Ethernet", welches eine Übertragungsgeschwindigkeit von 100 Megabit pro Sekunde aufweist, zum Einsatz. Kommunikationspartner oder Kommunikationsteilnehmer, im Folgenden auch einfach als Teilnehmer bezeichnet, können dabei beispielsweise Sensoren, Aktoren und Steuerungen in automatisierten Industrieumgebungen sein. Weil dabei prinzipiell verschiedene physikalische Übertragungskanäle zum Einsatz kommen und möglich sein sollen, besteht eine grundlegende Aufgabenstellung zunächst darin, das Ethernet-Protokoll für unterschiedliche physikalische Übertragungskanäle, die im weiteren auch einfach als physikalische Kanäle bezeichnet werden, zu verwirklichen.
Sodann werden bei sogenannten sicherheitsgerichteten Anwendungen zusätzliche Kommunikations- und Informationsanforderungen an die einzusetzenden Komponenten gestellt. Beispielsweise sollen über eine Datenlichtschranke, wie sie etwa bei Regalbediengeräten zum Einsatz kommen kann, bestimmte Geräte interne Informationen, die als solche für die übergeordnete Steuerung nicht von Bedeutung sind, zwischen einem beweglichen Teil und einem stationären Teil übertragen werden.

Das Dokument US2009/0154492 beschreibt wie man mithilfe eines Informationssymbols eine Änderung eines Übertragungsmodus signalisiert. Zusätzliche Datensymbole werden über den zweiten physikalischen Kanal versendet, wobei die zusätzliche Datensymbole in die Telegramme des zweiten Ethernet-Signals eingefügt werden.

Als eine **Aufgabe** der Erfindung kann angesehen werden, die grundsätzlich bekannten Verfahren zur Datenübertragung zwischen zwei Teilnehmern auf Grundlage des Ethernet-Standards unter Verwendung von zwei physikalischen Übertragungskanälen sowie den im Prinzip bekannten Wandler zum Senden und Empfangen von Daten auf Grundlage des Ethernet-Standards auf einem ersten und zweiten physikalischen Übertragungskanal so zu modifizieren, dass eine zusätzliche Informationsübertragung erfolgen kann, ohne die Übertragung gemäß dem Ethernet-Protokoll in nicht akzeptabler Weise zu beeinträchtigen.
Diese Aufgabe wird in verfahrensmäßiger Hinsicht durch das Verfahren mit den Merkmalen des Anspruchs 1 gelöst.
In vorrichtungsmäßiger Hinsicht wird die Aufgabe durch den Wandler mit den Merkmalen des Anspruchs 7. Das erfindungsgemäße Verfahren kann in besonders vorteilhafter Weise mit dem erfindungsgemäßen Wandler verwirklicht werden. Der erfindungsgemäße Wandler ist insbesondere zur Durchführung des erfindungsgemäßen Verfahrens geeignet.

Vorteilhafte Varianten des erfindungsgemäßen Verfahrens und bevorzugte Ausführungsbeispiele des erfindungsgemäßen Wandlers werden in beispielhafter Form in der folgenden Beschreibung und insbesondere im Zusammenhang mit den Figuren erläutert.

Das Verfahren der oben genannten Art ist erfindungsgemäß dadurch weitergebildet, dass beim Umwandeln des ersten Ethernet-Signals in das zweite Ethernet-Signal zusätzliche Datensymbole in die Telegramme des zweiten Ethernet-Signals eingefügt werden oder an diese Telegramme angehängt werden und dass die zusätzlichen Datensymbole zum Bereitstellen eines Zusatzinformationskanals über den zweiten physikalischen Kanal an den zweiten Teilnehmer gesendet werden.

Der Wandler der oben genannten Art ist erfindungsgemäß dadurch weitergebildet, dass eine Steuereinrichtung vorhanden ist, die mit der ersten Schnittstelle zusammenwirkt und die dazu eingerichtet ist, zusätzliche Datensymbole in die Telegramme des zweiten Ethernet-Signals einzufügen oder an die Telegramme des zweiten Ethernet-Signals anzuhängen, um einen Zusatzinformationskanal bereitzustellen.

Die erfindungsgemäße Datenübertragungsstrecke zum Übertragen von Daten zwischen einem ersten Teilnehmer und einem zweiten Teilnehmer weist zunächst einen ersten erfindungsgemäßen Wandler zum Bereitstellen einer Kommunikationsverbindung zwischen dem ersten physikalischen und dem zweiten physikalischen Kanal auf. Außerdem ist ein zweiter erfindungsgemäßer Wandler vorhanden zum Bereitstellen einer Kommunikationsverbindung zwischen einem dritten physikalischen Kanal und dem zweiten physikalischen Kanal. Funktional entspricht dabei der dritte physikalische Kanal dem ersten physikalischen Kanal, das heißt auf dem dritten physikalischen Kanal wird der Ethernet-Standard in vollem Umfang eingehalten.

Ein erster Kerngedanke der vorliegenden Erfindung kann darin gesehen werden, in ein zu sendendes Ethernet-Signal an definierten Stellen gezielt, also gemäß einer bestimmten Verabredung oder Definition entsprechend, Zusatzinformation in Form von zusätzlichen Datensymbolen einzufügen, welche sodann auf Empfängerseite, das heißt bei dem zweiten Teilnehmer wieder, der Definition entsprechend, herausgefiltert werden können.

Als weiterer Kerngedanke der Erfindung kann erachtet werden, dass alle Manipulationen an dem Ethernet-Signal ausschließlich den Datenstrom auf dem zweiten physikalischen Übertragungskanal betreffen, wobei zwischen dem Wandler und dem zweiten Teilnehmer für den zweiten physikalischen Kanal ein vom Standard abweichendes Protokoll verabredet ist. Der erste Teilnehmer auf der Seite des ersten physikalischen Übertragungskanals bemerkt hiervon nichts und muss demgemäß auch nicht darauf eingestellt werden. Hieraus ergibt sich als wesentlicher Vorteil, dass das erfindungsgemäße Verfahren und der erfindungsgemäße Wandler vollständig kompatibel zum Ethernet-Standard bleiben.

Für die Zwecke der vorliegenden Anmeldung wird unter einer Verbindung oder einem Verbundensein im Grundsatz immer eine wirkungsmäßige Verbindung oder ein wirkungsmäßiges Verbundensein verstanden. Weil es sich vorliegend um Verfahren und Vorrichtungen zur Informations- und Nachrichtenübertragung handelt, kommt es also im Wesentlichen darauf an, dass eine Verbindung jedenfalls so vorhanden ist, dass Informationen übertragen werden können. Eine materielle Verbindung, beispielsweise in Form eines elektrischen Kabels ist dabei nicht unbedingt notwendig.

Sodann ist in der folgenden Beschreibung und den Ansprüchen häufig von Ethernet-Signalen die Rede. Hierunter werden für die Zwecke dieser Beschreibung sowohl die Signale auf dem ersten physikalischen Kanal verstanden, welche den Ethernet-Standard grundsätzlich in vollem Umfang erfüllen. Aber mit dem Begriff Ethernet-Signale sollen auch die auf dem und über den zweiten physikalischen Kanal gesendeten und empfangenen Signale verstanden werden, bei denen der Ethernet-Standard in erfindungsgemäßer Weise in definierter Weise nicht eingehalten wird.

Die über den zweiten physikalischen Kanal gesendeten und empfangenen Signale, bei denen der Ethernet-Standard wegen der zusätzlich eingefügten Datensymbole nicht vollständig eingehalten wird, können demgemäß auch allgemein als Kommunikationssignale bezeichnet werden.

Schließlich soll unter dem Begriff des Teilnehmers für die Zwecke der vorliegenden Anmeldung einerseits das eigentliche Endgerät, beispielsweise also der stationäre oder mobile Teil eines Regalbediengeräts, andererseits aber auch eine übergeordnete Einheit, insbesondere unter Einschluss eines erfindungsgemäßen Wandlers, verstanden werden.

Für zahlreiche Anwendungen ist es erforderlich, dass die Informationen des Zusatzinformationskanals regelmäßig übertragen werden. Beispielsweise sollen bestimmte Geräteparameter, welche eine Information über die ordnungsgemäße Funktion dieser Geräte liefern, übertragen werden. Zum Beispiel soll bei einer Datenlichtschranke festgestellt und über den Zusatzinformationskanal übermittelt werden, ob der Sender der Datenlichtschranke ordnungsgemäß funktioniert und gegebenenfalls soll eine Sendeintensität kontinuierlich eingestellt werden. Eine solche kontinuierliche Informationsübertragung auf dem Zusatzinformationskanal kann durch Einfügen oder Anhängen von zusätzlichen Datensymbolen in oder an die Telegramme des zweiten Ethernet-Signals nur dann zuverlässig realisiert werden, wenn zu übertragende Telegramme überhaupt vorhanden sind. Das ist aber dann nicht der Fall, wenn auf dem ersten Ethernet-Signal gar keine Information oder jedenfalls zu wenig Information pro Zeiteinheit übertragen wird.

Bei dem erfindungsgemäßen Verfahren wird deshalb, insbesondere kontinuierlich, beobachtet, ob die Pause zwischen zwei Ethernet-Telegrammen eine zulässige Höchstdauer nicht überschreitet; und für die Fälle, dass die Höchstdauer überschritten wird, wird ein Übertragungsbedarf des Zusatzinformationskanals dadurch befriedigt, dass ein Ersatztelegramm, ein sogenannter Microframe, von dem Wandler auf dem zweiten physikalischen Kanal eingefügt wird. Die Microframes enthalten genau die zusätzlichen Datensymbole des Zusatzinformationskanals.

Bei den Microframes handelt es sich um Daten-Frames, die prinzipiell sehr ähnlich wie die Ethernet-Telegramme aufgebaut sind, bei denen aber im Wesentlichen nur die zusätzlichen Datensymbole als Nutzdaten enthalten sind. Es werden mit diesen Microframes keine echten Ethernet-Informationen übertragen und insbesondere finden diese Microframes nur auf dem zweiten physikalischen Kanal, nicht aber auf dem ersten physikalischen Kanal Verwendung.

Prinzipiell kann von dem Wandler auch eine Telegrammrate des ersten Ethernet-Signals festgestellt werden und für die Fälle, in denen eine Telegrammrate des ersten Ethernet-Signals niedriger ist als für einen Übertragungsbedarf des Zusatzinformationskanals notwendig wäre, oder für den Fall, dass eine Telegrammrate Null ist, werden von dem Wandler auf dem zweiten physikalischen Kanal Microframes gesendet, wobei zusätzliche Datensymbole des Zusatzinformationskanals in den Microframes enthalten oder an diese angehängt sind.

Grundsätzlich können das erfindungsgemäße Verfahren und/oder der erfindungsgemäße Wandler für Übertragungsverfahren eingesetzt werden, bei denen nur Daten von dem ersten Teilnehmer zu dem zweiten Teilnehmer gesendet werden. Besonders vorteilhaft sind Ausführungsvarianten des erfindungsgemäßen Verfahrens, bei denen ein drittes Ethernet-Signal, das der Wandler von dem zweiten Teilnehmer über den zweiten physikalischen Kanal empfängt, von dem Wandler in ein viertes Ethernet-Signal umgewandelt wird, welches von dem Wandler dann über den ersten physikalischen Kanal an den ersten Teilnehmer gesendet wird, und bei dem zusätzliche Datensymbole, die in Telegramme oder Microframes des dritten Ethernet-Signals, der erfindungsgemäßen Verabredung oder Definition entsprechend, eingefügt oder an diese Telegramme oder Microframes angehängt sind, beim Umwandeln des dritten Ethernet-Signals in das vierte Ethernet-Signal herausgefiltert werden, bevor das vierte Ethernet-Signal an den ersten Teilnehmer gesendet wird. Hierbei erfolgt für das vierte Ethernet-Signal sozusagen der umgekehrte Prozess insofern, als die zusätzlichen Datensymbole nun aus den Telegrammen oder Microframes des dritten Ethernet-Signals der jeweiligen Vorschrift entsprechend, nach welcher die Datensymbole in das dritte Ethernet-Signal eingefügt wurden, nun wieder herausgefiltert oder herausgenommen werden. Mit dem erfindungsgemäßen Verfahren ist demgemäß das Übertragen der Zusatzinformationen unabhängig voneinander in beiden Richtungen möglich.

Beispielsweise ermöglicht eine Datenlichtschranke, wie sie bei der Realisierung der Erfindung zum Einsatz kommen kann, einen Voll-Duplex-Betrieb, das heißt sie hat zwei völlig unabhängig voneinander funktionierende optische Kanäle für den Hin- und Rücktransport der Ethernet-Telegramme. Auch die Ethernet-Telegramme auf dem ersten physikalischen Kanal, beispielsweise einem elektrischen Kabel, also die Ethernet-Telegramme des ersten und des vierten Ethernet-Signals, bilden gemeinsam einen Voll-Duplex-Kommunikationskanal, das heißt es gibt einen Sende- und Empfangskanal, die gleichzeitig aktiv sein können.

In vorrichtungsmäßiger Hinsicht weist der erfindungsgemäße Wandler hierzu zweckmäßig einen zweiten Empfänger auf, der mit der zweiten Anschlusseinrichtung verbunden ist, zum Empfangen eines dritten Ethernet-Signals. Außerdem ist eine zweite Schnittstelle vorhanden, die mit dem zweiten Empfänger verbunden ist, zum Umwandeln des dritten Ethernet-Signals in ein viertes Ethernet-Signal, wobei die Steuereinrichtung mit der zweiten Schnittstelle und/oder mit der zweiten Anschlusseinrichtung zusammenwirkt und dazu eingerichtet ist, in dem dritten Ethernet-Signal enthaltene zusätzliche Datensymbole herauszufiltern und wobei außerdem ein zweiter Sender vorhanden ist, der mit der ersten Anschlusseinrichtung und der zweiten Schnittstelle verbunden ist, zum Senden des vierten Ethernet-Signals über den ersten physikalischen Kanal.

Der Ethernet-Standard IEEE 802.3 schreibt einen Mindestabstand, also eine Mindestlänge der Pausen, zwischen zwei aufeinanderfolgenden Ethernet-Telegrammen vor. In diesen Pausen werden sogenannte "Idle-Symbole" gesendet, wobei sich konkret um abwechselnd nacheinander gesendete Einsen und Nullen handelt. Diese Idle-Symbole dienen der Synchronisation auf einen tatsächlichen Telegrammanfang.

Im Hinblick auf die Variante der vorliegenden Erfindung, bei der Microframes mit zusätzlichen Datensymbolen gesendet werden, muss dafür gesorgt werden, dass die Microframes nicht in Konflikt mit den eigentlichen Ethernet-Telegrammen kommen und/oder dass die Microframes nicht den Mindestabstand zwischen Ethernet-Telegrammen in nicht tolerabler Weise stören.

Bei dem erfindungsgemäßen Verfahren prüft der Wandler vor dem Senden eines Microframes, ob genügend Zeit bis zum nächsten Telegramm des ersten Ethernet-Signals bleibt und dass ein Microframe nur dann gesendet wird, wenn bis zum nächsten Telegramm des ersten Ethernet-Signals genügend Zeit bleibt.

Bei dem erfindungsgemäßen Wandler ist für diese Variante zweckmäßig in der Steuereinrichtung ein Datenpuffer vorhanden, in welchem über den zweiten physikalischen Kanal zu sendende Daten vor dem Senden einlesbar sind zum Feststellen, ob für das Einfügen eines Microframes mit zusätzlichen Datensymbolen hinreichend Zeit zur Verfügung steht.

Dadurch, dass die über den zweiten physikalischen Kanal zu sendenden Daten zuvor den Datenpuffer durchlaufen haben, ergibt sich eine konstante Verzögerung des Daten- oder Telegrammstroms, auf dem zweiten physikalischen Kanal. Diese Verzögerung entspricht der Zeit, welche die Daten benötigen, um den Datenpuffer zu durchlaufen. Eine solche konstante Verzögerung kann in den allermeisten Fällen toleriert werden. Besonders wichtig ist, dass durch die beschriebenen Maßnahmen die Integrität des eigentlichen Ethernet-Signals ansonsten in keiner Weise beeinträchtigt ist, wenn Microframes gesendet werden.

Erfindungsgemäß weist der Datenpuffer mindestens die Größe eines Microframes zuzüglich einer Mindestpausenzeit, beispielsweise 32 Idle-Symbole, auf.

Im Hinblick auf das Einfügen oder Anhängen der zusätzlichen Datensymbole in oder an die Telegramme des zweiten Ethernet-Signals besteht im Grundsatz große Freiheit. Beispielsweise können die zusätzlichen Datensymbole in den Datenfeldern der Telegramme des zweiten Ethernet-Signals eingefügt werden und/oder in die Präambel dieser Telegramme und/oder zwischen einem CRC-Feld (CRC = Cyclic Redundancy Check) und einem ESD-Feld (ESD = End of Stream Delimiter) dieser Telegramme eingefügt werden und/oder nach dem ESD-Feld der Telegramme des zweiten Ethernet-Signals angehängt werden.

Dieselben Positionierungsmöglichkeiten für die zusätzlichen Datensymbole ergeben sich im Prinzip für die Microframes. Eine Sondersituation ist der Fall, bei dem die zusätzlichen Datensymbole in die Datenfelder der Microframes eingefügt werden, weil die Datenfelder der Microframes dann im Wesentlichen nur die zusätzlichen Datensymbole als Nutzdaten enthalten.

Im Hinblick auf die Größe oder Menge der zusätzlichen Datensymbole ist einerseits klar, dass man bestrebt ist, eine ausreichende Kapazität zur Übertragung von zusätzlicher Information bereitzustellen. Eine Begrenzung dieser Anforderung ist gegeben durch die Toleranzschwellen der unterschiedlichen "Finite State Machines "oder" Zu standsmaschinen" der Ethernet-Controller verschiedener Hersteller. Nur wenn der Datenstrom auf dem zweiten physikalischen Kanal nicht physisch überwacht wird, werden die zusätzlichen Symbole toleriert und es wird keine Fehlermeldung ausgegeben. Umfangreiche Untersuchungen haben jedoch ergeben, dass die meisten Ethernet-Controller eine Manipulation am Ende des Telegramms per Spezifikation zulassen und dass sie außerdem gegen eine Unterschreitung der Minimalpause tolerant sind.

Bei einer besonders bevorzugten Variante des erfindungsgemäßen Verfahrens werden zwei von minimal 32 Idle-Symbolen der Telegrammpausen durch zusätzliche Datensymbole des Zusatzinformationskanals ersetzt.

Das erfindungsgemäße Verfahren und der erfindungsgemäße Wandler sind grundsätzlich für unterschiedliche physikalische Übertragungskanäle einsetzbar und verwendbar. Beispielsweise kann der erste physikalische Kanal und/oder der zweite physikalische Kanal ein elektrischer Übertragungskanal, ein optischer Übertragungskanal oder ein Funkübertragungskanal sein. Bei dem optischen Übertragungskanal kann es sich um einen lichtleitergebundenen Übertragungskanal oder einen Übertragungskanal in der Art einer Datenlichtschranke handeln.

Besonders vorteilhaft kann die Erfindung eingesetzt werden, wenn der erste physikalische Kanal ein elektrischer Übertragungskanal und der zweite physikalische Kanal ein optischer Übertragungskanal ist.

Grundsätzlich sind aber auch vorteilhafte Einsatzmöglichkeiten der Erfindung möglich, wenn der erste physikalische Kanal und der zweite physikalische Kanal gleiche Übertragungskanäle sind, beispielsweise jeweils elektrische, optische oder Funkübertragungskanäle sind.

Das Signal auf dem Kupferkabel kann beispielsweise MLT-3-kodiert (MLT = Multi Level Transmission) sein. Ein Ethernet-Kabelsignal ist grundsätzlich MLT-3-kodiert. Hierbei handelt es sich um eine Kodierung, welche die Signalübertragung durch Transformatoren und damit die galvanische Trennung aller Ethernet-Segmente ermöglicht.

Bei der Steuereinrichtung kann es sich zweckmäßigerweise um einen Microcontroller, insbesondere um einen programmierbaren Microcontrollers oder einen FPGA oder ähnliche programmierbare Logikkomponenten, handeln.

Im Hinblick auf die verwendeten ersten und zweiten Schnittstellen besteht im Grundsatz Freiheit bei der Wahl der Komponenten. Es kommt im Grundsatz nur darauf an, dass die gewünschten und vorstehend beschriebenen Funktionalitäten verwirklicht werden. Besonders bevorzugt werden hier MII-Schnittstellen (MII = Media Independent Interface) verwendet, weil diese im Prinzip unabhängig von dem jeweils verwendeten physikalischen Übertragungskanal sind.

Zwischen dem Wandler und dem zweiten Teilnehmer kann bei einer weiteren bevorzugten und häufig eingesetzten Variante des erfindungsgemäßen Verfahrens zweckmäßig ein zweiter Wandler vorhanden sein. Dieser zweite Wandler arbeitet im Prinzip ähnlich oder identisch wie der vorstehend beschriebene Wandler, das heißt er filtert über den Zusatzinformationskanal einkommende zusätzliche Datensymbole heraus und fügt andererseits in das auf dem zweiten physikalischen Kanal von dem zweiten Teilnehmer zu sendende Signal zusätzliche Datensymbole des Zusatzinformationskanals ein. Die Funktionsweise im Einzelnen kann prinzipiell völlig derjenigen entsprechen, die oben im Zusammenhang mit dem erfindungsgemäßen Verfahren und dem erfindungsgemäßen Wandler beschrieben wurde. Zwischen dem zweiten Wandler und einem sich daran anschließenden Gerät, beispielsweise dem mobilen Teil eines Regalbediengeräts ist dann wiederum ein physikalischer Übertragungskanal gebildet, im erwähnten Beispiel zweckmäßig ein kabelgebundener elektrischer Übertragungskanal.

Bei einer vorteilhaften Variante der erfindungsgemäßen Datenübertragungsstrecke sind der erste physikalische Kanal und der dritte physikalische Kanal gleiche physikalische Kanäle und insbesondere handelt es sich hierbei um elektrische kabelgebundene Übertragungskanäle. Das bedeutet, dass bei dieser Ausführungsvariante der erfindungsgemäßen Datenübertragungsstrecke auf dem zweiten physikalischen Kanal einerseits die über den ersten und den dritten physikalischen Kanal zwischen dem ersten Teilnehmer und dem zweiten Teilnehmer gesendeten und empfangenen Daten transportiert werden. Außerdem werden über den zweiten physikalischen Kanal zwischen dem ersten und dem zweiten Wandler die Daten des Zusatzinformationskanals gesendet und empfangen. Wesentlich für die Erfindung ist, dass der erste Teilnehmer und der zweite Teilnehmer von dem Zusatzinformationskanal nichts bemerken, das heißt für den ersten Teilnehmer und den zweiten Teilnehmer handelt es sich um eine standardgemäße Ethernet-Kommunikationsverbindung.

Bei einem besonders bevorzugtem Ausführungsbeispiel ist außerdem der zweite physikalische Kanal ein optischer Übertragungskanal und die zweite Anschlusseinrichtung des ersten Wandlers und die zweite Anschlusseinrichtung des zweiten Wandlers weisen jeweils einen Lichtsender und einen Lichtempfänger auf.

Insbesondere kann durch die zweite Anschlusseinrichtung des ersten Wandlers und die zweite Anschlusseinrichtung des zweiten Wandlers eine Datenlichtschranke gebildet sein.

Grundsätzlich können über den Zusatzinformationskanal beliebige Daten gesendet und empfangen werden. Beispielsweise kann, wenn für den zweiten physikalischen Kanal eine Datenlichtschranke eingesetzt wird, die von der jeweiligen Gegenseite empfangene Lichtleistung an die Sende- oder Gegenseite zurückübertragen werden. Die Gegenseite kann auf Grundlage dieser Information daraufhin eine Regelung oder Einstellung der Lichtsendeleistung auf einen Sollwert vornehmen.

Bei einem anderen Anwendungsbeispiel wird ein "Notaus"-Signal von dem ersten Wandler über den zweiten physikalischen Kanal an den zweiten Wandler übertragen.

Besonders vorteilhaft können das erfindungsgemäße Verfahren, der erfindungsgemäße Wandler und die erfindungsgemäße Datenübertragungsstrecke bei Regalbediengeräten eingesetzt werden. Dabei kann beispielsweise der zweite Wandler, an welchen über eine Datenlichtschranke ein "Notaus"-Signal übermittelt werden kann, am mobilen Teil des Regalbediengeräts angeordnet sein.

Weitere Vorteile und Merkmale der Erfindung werden im Folgenden mit Bezug auf die beigefügten Figuren beschrieben.

Hierin zeigt:
- Fig. 1:: eine schematische Ansicht einer erfindungsgemäßen Datenübertragungs-strecke;
- Fig. 2:: eine detaillierte Ansicht einer erfindungsgemäßen Datenübertragungsstrecke, anhand deren auch ein erfindungsgemäßer Wandler und das erfindungsgemäße Verfahren erläutert werden;
- Fig. 3:: eine detaillierte Ansicht eines erfindungsgemäßen Wandlers;
- Fig. 4:: in schematischer Ansicht die grobe Struktur eines Ethernet-Signals;
- Fig. 5:: in schematischer Ansicht den detaillierteren Aufbau eines EthernetTelegramms sowie Ausführungsbeispiele für das Einfügen oder Anhängen der zusätzlichen Datensymbole in oder an das Ethernet-Telegramm.

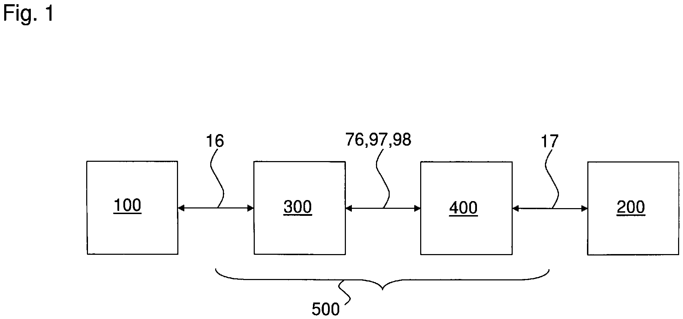

Anhand von Fig. 1 wird zunächst in ganz schematischer Form der Aufbau einer erfindungsgemäßen Datenübertragungsstrecke zum Übertragen von Daten zwischen einem ersten Teilnehmer 100 und einem zweiten Teilnehmer 200 erläutert. Die Datenübertragungsstrecke 500 beinhaltet als wesentliche Bestandteile einen ersten erfindungsgemäßen Wandler 300 und einen zweiten erfindungsgemäßen Wandler 400. Der erste Teilnehmer 100 ist über einen ersten physikalischen Kanal 16, beispielsweise ein elektrisches Kabel, mit dem ersten Wandler 300 verbunden. Der zweite erfindungsgemäße Wandler 400 ist über einen dritten physikalischen Kanal 17, wobei es sich ebenfalls um ein elektrisches Kabel handeln kann, mit dem zweiten Teilnehmer 200 verbunden. Auf dem ersten physikalischen Kanal 16 und dem dritten physikalischen Kanal 17 wird der Ethernet-Standard in vollem Umfang eingehalten.

Der erste Wandler 300 und der zweite Wandler 400 sind über den zweiten physikalischen Kanal 76 miteinander verbunden, auf welchem der Ethernet-Standard nicht eingehalten wird. Erfindungsgemäß werden hier neben den Daten, die auch auf dem ersten physikalischen Kanal 16 und dem dritten physikalischen Kanal 17 hin und her gesendet werden, auf einem Zusatzinformationskanal 98 zusätzliche Datensymbole 97 gesendet und empfangen. Die zusätzlichen Datensymbole 97 werden nur zwischen dem ersten Wandler 300 und dem zweiten Wandler 400 hin und her gesendet, das heißt der Zusatzinformationskanal 98 existiert in diesem Sinn nur zwischen dem ersten Wandler 300 und dem zweiten Wandler 400.

Gleiche oder gleichwirkende Komponenten sind in allen Figuren mit denselben Bezugszeichen versehen.

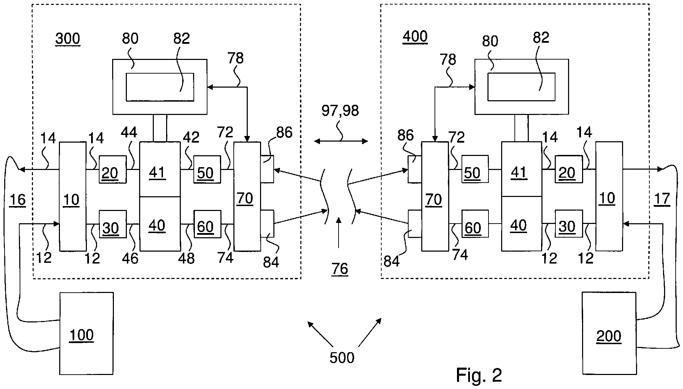

Mit Bezug auf Fig. 2 werden ein Ausführungsbeispiel einer erfindungsgemäßen Datenübertragungsstrecke und eines ersten erfindungsgemäßen Wandlers 300 erläutert, der im gezeigten Beispiel zur Datenübertragung zwischen zwei Teilnehmern 100, 200 auf Grundlage des Ethernet-Standards verwendet wird. Der erste Teilnehmer 100 sendet und empfängt Daten über einen ersten physikalischen Kanal 16, wobei es sich beispielsweise um einen kabelgebundenen elektrischen Übertragungskanal handeln kann. Ein zweiter erfindungsgemäßer Wandler 400, der mit dem zweiten Teilnehmer 200 verbunden ist und prinzipiell gleich aufgebaut sein kann wie der erste Wandler 300, sendet und empfängt Daten über einen zweiten physikalischen Datenübertragungskanal 76, bei dem sich beispielsweise um einen optischen Übertragungskanal in der Art einer Datenlichtschranke handeln kann. Außerdem kann der zweite Wandler 400 über einen Zusatzinformationskanal 98, ebenfalls über den zweiten physikalischen Kanal 76, in erfindungsgemäßer Weise Informationen senden und empfangen.

Der erste erfindungsgemäße Wandler 300 weist zunächst eine erste Anschlusseinrichtung 10 zum Herstellen einer Wirkverbindung mit dem ersten physikalischen Kanal 16 auf. Hierbei kann es sich für den Fall, dass der erste physikalische Kanal 16 ein kabelgebundener elektrischer Übertragungskanal ist, um einen Übertrager mit geeigneten Steckverbindungen handeln. Sodann ist auf Seiten des zweiten physikalischen Kanals 76 eine zweite Anschlusseinrichtung 70 vorhanden. Im Fall, das es sich bei dem zweiten physikalischen Kanal 76 um einen optischen Übertragungskanal in der Art einer Datenlichtschranke handelt, kann es sich dabei um einen optisches Frontend mit geeigneten Optiken, Sendelichtquellen und Empfängern handeln. Die erste Anschlusseinrichtung 10 ist mit einem ersten Empfänger 30 verbunden, der seinerseits über eine Verbindung 46 mit einer ersten Schnittstelle 40 verbunden ist. Die erste Schnittstelle 40 ihrerseits ist über eine Leitung 48 mit einem ersten Sender 60 verbunden, dessen Ausgang der zweiten Anschlusseinrichtung 70 zugeführt ist.

Durch die Komponenten erste Anschlusseinrichtung 10, erster Empfänger 30, erste Schnittstelle 40, erster Sender 60 und zweite Anschlusseinrichtung 70 wird eine Übertragungsstrecke vom Eingang des ersten Wandlers 300, der über den ersten physikalischen Kanal 16 mit dem ersten Teilnehmer 100 verbunden ist, zu einem Empfänger 86 des zweiten Wandlers 400, der insbesondere ein Lichtempfänger 86 sein kann, bereitgestellt.

Die Übertragungsstrecke in umgekehrter Richtung, also von einem Sender 84 des zweiten Wandlers 400, der insbesondere ein Lichtsender 84 sein kann, zu einem mit dem ersten Teilnehmer 100 über den ersten physikalischen Kanal 16 verbundenen Ausgang des ersten Wandlers, beinhaltet, ausgehend von der zweiten Anschlusseinrichtung 70 zunächst einen zweiten Empfänger 50, der über eine Verbindungsleitung 42 mit einer zweiten Schnittstelle 41 verbunden ist. Die zweite Schnittstelle 41 ihrerseits ist über eine Verbindungsleitung 44 mit einem zweiten Sender 20 verbunden, dessen Ausgangssignal schließlich der ersten Anschlusseinrichtung 10 zugeführt ist.

Als wesentliche Komponente des ersten erfindungsgemäßen Wandlers 300 ist außerdem eine Steuerungseinrichtung 80 vorhanden, die mit der ersten Schnittstelle 40 und der zweiten Schnittstelle 41 und darüber hinaus im gezeigten Beispiel auch mit der zweiten Anschlusseinrichtung 70 zusammenwirkt.

Eine Ausführungsvariante des erfindungsgemäßen Verfahrens wird nachstehend beschrieben, wobei beispielhaft davon ausgegangen wird, dass es sich bei dem ersten physikalischen Kanal 16 um einen elektrischen kabelgebundenen Übertragungskanal handelt und dass der zweite physikalische Kanal 76 ein optischer Übertragungskanal in der Art einer Datenlichtschranke ist. Für die wesentlichen erfindungsgemäßen Aspekte spielt das aber keine Rolle.

Ein von dem ersten Teilnehmer 100 über den ersten physikalischen Kanal 16 gesendetes Ethernet-Signal 12 gelangt über die erste Anschlusseinrichtung 10 an den ersten Empfänger 30, der dieses Signal über die Verbindung 46 an die erste Schnittstelle 40 weiterleitet. In der ersten Schnittstelle 40 wird das erste Ethernet-Signal 12 in ein zweites Ethernet-Signal 74 umgewandelt, welches über die Leitung 48 dem zweiten Sender 60 zugeführt wird, der es an die zweite Anschlusseinrichtung 70 weiterleitet. Im Anschluss wird das zweite Ethernet-Signal 74 über den zweiten physikalischen Kanal 76 an den zweiten Wandler 400 gesendet. Ein wesentlicher Gesichtspunkt der Erfindung besteht nun darin, dass beim Umwandeln des ersten Ethernet-Signals 12 in das zweite Ethernet-Signal 74 zusätzliche Datensymbole 97 in Telegramme des zweiten Ethernet-Signals 74 eingefügt werden oder an diese Telegramme angehängt werden. Durch diese zusätzlichen Datensymbole 97 wird zwischen der zweiten Anschlusseinrichtung 70 und dem zweiten Wandler 400 ein Zusatzinformationskanal 98 bereitgestellt, der in Fig. 1 schematisch durch einen Doppelpfeil 98 dargestellt ist.

Für den Fall, dass eine Telegrammrate der Ethernet-Telegramme im ersten Ethernet-Signal 12 nicht ausreicht oder gegebenenfalls sogar null ist, werden, wie vorstehend beschrieben, die zusätzlichen Datensymbole 97 in Microframes über den zweiten physikalischen Kanal 76 an den zweiten Teilnehmer 200 übermittelt. Die beiden Richtungen des Zusatzinformationskanals 98 existieren unabhängig voneinander und bedingen sich nicht. Das heißt zusätzliche Datensymbole 97 können unabhängig voneinander in beiden Richtungen übermittelt werden.

In ganz entsprechender Weise sendet der zweite Wandler 400 ein drittes Ethernet-Signal 72 aus, welches in erfindungsgemäßer Weise zusätzliche Datensymbole 97 aufweisen kann, die entweder in Ethernet-Telegrammen oder Microframes enthalten oder an diese angehängt sind. Das dritte Ethernet-Signal 72 wird zunächst von der zweiten Anschlusseinrichtung 70, im konkreten Beispiel also einem optischen Frontend mit einem Lichtempfänger 86 und einem Lichtsender 84, empfangen und an eine Empfängerschaltung 50 weitergeleitet. Über die Leitung 42 gelangt dieses Signal anschließend an die zweite Schnittstelle 41 und wird dort in ein viertes Ethernet-Signal 14 umgewandelt. Dabei werden in erfindungsgemäßer Weise eventuell enthaltene zusätzliche Datensymbole 97 herausgefiltert oder herausgenommen. Das ist möglich, weil die zusätzlichen Datensymbole 97 an definierten Stellen in den Datenstrom des dritten Ethernet-Signals 72 angefügt wurden.

Das um die zusätzlichen Datensymbole 97 bereinigte vierte Ethernet-Signal 14 gelangt dann über den zweiten Sender 20 und die erste Anschlusseinrichtung 10 auf den ersten physikalischen Kanal 16, also konkret auf das Ethernet-Kabel und schließlich zum ersten Teilnehmer 100.

Die zusätzlichen Datensymbole 97 können prinzipiell beim Wandeln des ersten Ethernet-Signals 12 in das zweite Ethernet-Signal 74, also in der ersten Schnittstelle 40, eingefügt werden. Das ist in Fig. 1 schematisch durch die Verbindungsleitung 78 zwischen der Steuerungseinrichtung 80 und der zweiten Anschlusseinrichtung 70 dargestellt.

Entsprechend können in dem dritten Ethernet-Signal 72 enthaltene zusätzliche Datensymbole, wie oben erläutert, im Funktionsbereich der zweiten Schnittstelle 41 aus dem dritten Ethernet-Signal 72 herausgenommen werden.

Um zu vermeiden, dass in den Datenstrom eingefügte Microframes mit echten Ethernet-Telegrammen des ersten Ethernet-Signals 12 kollidieren, werden die auf dem zweiten physikalischen Kanal 76 zu sendenden Daten vor dem Senden in einen Datenpuffer 82 eingelesen, der im Funktionsbereich der Steuerungseinrichtung 80 angesiedelt ist. Dieser Datenpuffer 82 weist mindestens die Größe eines Microframes zuzüglich einer Mindestpausendauer, beispielsweise also 32 IDLE-Symbole auf.

Zwischen dem zweiten erfindungsgemäßen Wandler 400 und dem zweiten Teilnehmer 200 ist ein dritter physikalischer Kanal 17 gebildet, bei dem es sich um alle Arten von physikalischen Übertragungskanal handeln kann, wie auch bei dem ersten physikalischen Kanal 16 und dem zweiten physikalischen Kanal 76. Der zweite Wandler 400 erfüllt zwischen dem dritten physikalischen Kanal 17 und dem zweiten physikalischen Kanal 76 im Prinzip dieselbe Funktion wie der erste Wandler 300 zwischen dem ersten physikalischen Kanal 16 und dem zweiten physikalischen Kanal 76.

Insbesondere können der erste physikalische Kanal 16 und der dritte physikalische Kanal 17 jeweils kabelgebundene elektrische Übertragungskanäle und der zweite physikalische Kanal 76 kann ein optischer Übertragungskanal sein. Die erfindungsgemäß beschriebene Datenübertragung auf dem Zusatzinformationskanal 98 ist dann im Prinzip zwischen den Wandlern 300 und 400 verabredet. Von den auf dem Zusatzinformationskanal 98 zusätzlich übertragenen Informationen bleiben der erste physikalische Kanal 16 und der dritte physikalische Kanal 17 völlig unbeeinflusst. Für den praktischen Einsatz können deshalb der erste Wandler 300 und der zweite Wandler 400 einfach an die entsprechenden vorhandenen Komponenten angesteckt werden. Die erforderlichen Informationen werden über den Zusatzinformationskanal 98 übertragen, ohne dass der erste Teilnehmer 100 und der zweite Teilnehmer 200 hiervon etwas bemerken.

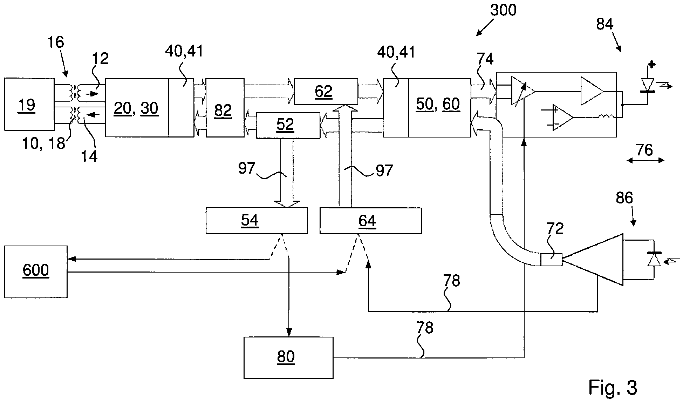

Weitere Details des erfindungsgemäßen Wandlers 300 und des erfindungsgemäßen Verfahrens werden mit Bezug auf Fig. 3 erläutert. Dargestellt ist dort ein Ausführungsbeispiel eines erfindungsgemäßen Wandlers 300, wobei der erste physikalische Kanal 16 ein kabelgebundener elektrischer Übertragungskanal und der zweite physikalische Kanal 76 ein optischer Übertragungskanal in der Art einer Datenlichtschranke ist. Über eine Schnittstelle 19 wird ein Ethernet-Signal eingespeist, welches sodann über einen Transformator 18 als erstes Ethernet-Signal 12 an einen Eingang des erfindungsgemäßen Wandlers 300 gegeben wird. Entsprechend wird ein viertes Ethernet-Signal 14 über den Transformator und die Schnittstelle 19 an einen hier nicht dargestellten Teilnehmer ausgegeben. In der im Zusammenhang mit Fig. 2 erläuterten Weise erfolgt auch bei dem in Fig. 3 dargestellten Ausführungsbeispiel das Einfügen und Extrahieren von zusätzlichen Datensymbolen 97. Gleichwirkende Bestandteile sind in Fig. 3 mit denselben Bezugszeichen wie in Fig. 2 versehen.

Der als erstes Ethernet-Signal 12 einkommende Datenstrom wird dabei zunächst in einen Datenpuffer 82 eingelesen, so dass geprüft werden kann, ob für das Einfügen von zusätzlichen Datensymbolen 97 genügend Zeit besteht. Wenn das der Fall ist, werden, angedeutet durch den Funktionsblock 62, zusätzliche Datensymbole 97 eingefügt. Durch den Funktionsblock 64 ist hierbei schematisch eine Datenquelle angedeutet. In prinzipiell bekannter Weise werden diese zusätzlichen Datensymbole 97 sodann über den zweiten physikalischen Kanal 76, der im gezeigten Beispiel ein optischer Übertragungskanal ist, versendet. Hierzu ist ein Lichtsender 84 vorhanden, dessen Ansteuerkomponenten in Fig. 3 schematisch dargestellt sind.

Zum Empfangen von Daten über den zweiten physikalischen Kanal 76 ist ein Lichtempfänger 86 vorhanden, dessen empfangene Daten das dritte Ethernet-Signal 72 darstellen.

Über eine Verbindungsleitung 78 wird eine von dem Lichtempfänger 86 gemessene Leistung der Datenquelle 84 zugeführt, das heißt, die von dem Lichtempfänger 86 empfangene Lichtleistung wird in Form von zusätzlichen Datensymbolen 97 an die Gegenseite zurückgesandt. Dort kann dann auf Grundlage dieser Information eine Regelung oder Einstellung der Sendeleistung auf einen Sollwert erfolgen.

In ganz entsprechender Weise können zusätzliche Datensymbole 97, welche in dem dritten Ethernet-Signal 72 enthalten sind, im Funktionsblock 52 aus dem Datenstrom extrahiert werden und einer in Fig. 3 schematisch dargestellten Datensenke 54 zugeführt werden. Bei den dabei extrahierten zusätzlichen Datensymbolen 97 kann es sich wiederum um eine Lichtintensitätsinformation handeln und zwar diesmal der Empfangsintensität, welche die Gegenseite von dem Lichtsender 84 empfängt. Auf Grundlage dieser Information kann dann, über den Microcontroller 80 und die Verbindungsleitung 78, eine Einstellung oder Regelung des Lichtsenders 84 auf einen Sollwert durchgeführt werden.

Bei einem weiteren Anwendungsbeispiel werden der Datenquelle 64 Informationen einer Notaus-Steuerung 600 zugeführt, welche dann im Bereich des Funktionsblocks 62 als zusätzliche Datensymbole 97 eingespeist und in Folge über den zweiten physikalischen Kanal 76 an die Gegenseite übertragen werden. Andererseits kann auch von der Gegenseite eine Notaus-Information über den zweiten physikalischen Kanal 76 gesendet werden, welche dann, wie vorstehend beschreiben, im Bereich des Funktionsblocks 52 aus dem Datenstrom extrahiert und über den Funktionsblock 54 an die Notaus-Steuerung 600 gegeben wird.

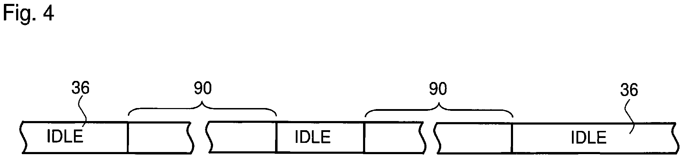

Die grobe Struktur eines Ethernet-Signals ist in Fig. 4 dargestellt. Zwei aufeinanderfolgende Ethernet-Telegramme 90 weisen dabei einen gewissen Mindestabstand auf. Die Telegrammpause 36 kann beispielsweise mindestens 32 sogenannte IDLE-Symbole betragen. Bei einem IDLE-Symbol handelt es sich um ein Oktett von aufeinanderfolgenden Nullen und Einsen.

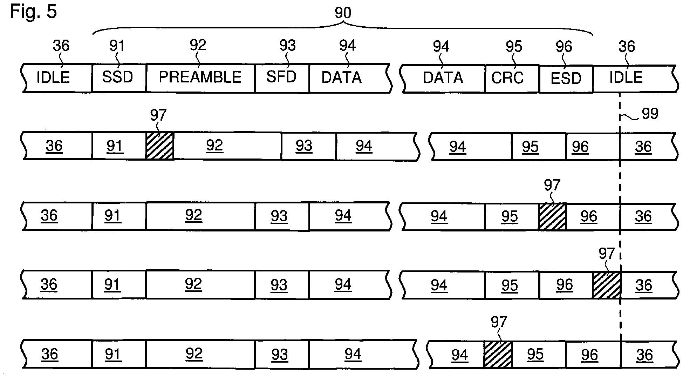

Die Möglichkeiten, zusätzliche Datensymbole 97 in ein Ethernet-Telegramm 90 einzufügen oder an ein Ethernet-Telegramm 90 anzuhängen, werden mit Bezug auf Fig. 5 erläutert. Fig. 5a zeigt zunächst die Struktur eines Ethernet-Telegramms 90 in detaillierterer Form. Der Aufbau im Einzelnen ergibt sich aus dem Standard IEEE 802.3. In der gezeigten Darstellung verläuft die Zeitachse von links nach rechts, das heißt das Datenfeld SSD (SSD = Start of Stream Delimiter) wird zeitlich als erstes und das Datenfeld ESD (ESD = End of Stream Delimiter) wird als letztes über den jeweiligen physikalischen Signal gesendet.

Ein Ethernet-Telegramm 90 beginnt demgemäß mit dem Datenfeld SSD 91 und wird gefolgt von der sogenannten Präambel 92 und dem Datenfeld SFD 93 (SFD = Start of Frame Delimiter). Daran schließen sich die eigentlichen Nutzdaten, die in Datenfeldern 94 übertragen werden, an. Hierauf folgen ein Datenfeld CRC 95 (CRC = Cyclic Redundancy Check) und ESD 96 (ESD = End of Frame Delimiter), womit das Ethernet-Telegramm 90 abgeschlossen wird.

Fig. 5b zeigt beispielhaft, wie ein zusätzliches Datensymbol 97 vor der Präambel 92 des Ethernet-Telegramms 90 eingefügt werden kann. In Fig. 5c ist ein zusätzliches Datensymbol 97 zwischen die Felder CRC 95 und ESD 96 eingefügt. Fig. 5d zeigt eine Situation, bei der ein zusätzliches Datensymbol 97 am Ende eines Ethernet-Telegramms 90, das heißt unmittelbar nach dem Datenfeld ESD 96 angehängt ist. Fig. 5e schließlich zeigt eine Möglichkeit, bei der ein zusätzliches Datensymbol 97 im Bereich der Datenfelder 94, also im Bereich der Ethernet-Nutzdaten, eingefügt ist. Konkret ist in dem Beispiel aus Fig. 5e das zusätzliche Datensymbol 97 am Ende des Felds 94 unmittelbar vor dem Feld CRC 95 eingefügt. Alle in den Figuren 5b bis 5e gezeigten Situationen zeichnen sich dadurch aus, dass das ursprüngliche in Fig. 5a dargestellte Ethernet-Telegramm 90 um die Länge eines zusätzlichen Datensymbols 97 verlängert wird, was durch die gestrichelte vertikale Linie 99 schematisch angedeutet ist.

Für die Zwecke der Beschreibung wurde hier davon gesprochen, dass jeweils ein Datensymbol 97 eingefügt wird. Es können, je nach Anwendungssituation, aber auch mehrere Datensymbole eingefügt werden. Prinzipiell kann die Zahl der einzufügenden Datensymbole 97 auch variieren, beispielsweise, wenn der Wandler über den Datenpuffer 82 feststellt, dass hinreichend Zeit für das Einfügen von mehreren Datensymbolen 97 zur Verfügung steht.

Bei der hier beschriebenen Erfindung wird ein Wandler, bei dem es sich insbesondere um Ethernet-Mediaconverter handeln kann, dazu benutzt, um von einen ersten physikalischen Kanal auf einen zweiten physikalischen Kanal, beispielsweise von Kabel auf Lichtleitfaser und umgekehrt zu wechseln. Ein erster Algorithmus bereitet das beispielsweise MLT-3-kodierte Kabelsignal für eine Standardschnittstelle MII (Media independant interface) auf. Ein zweiter Algorithmus erzeugt sodann aus den an dieser Standardschnittstelle einlaufenden Ethernet-Symbolen optische übertragbare Symbole. Ein Zusatzinformationskanal kann erfindungsgemäß dadurch geschaffen werden, dass der Datenstrom an der MII-Schnittstelle durch einen Microcontroller überwacht und manipuliert wird. Die Daten des Zusatzkanals werden in zusätzliche Datensymbole übersetzt, die an exponierten, also definierten Stellen des Ethernet-Telegramms in die optische Strecke, also den zweiten physikalischen Kanal, eingespeist werden. Auf der Empfangsseite im beschriebenen Beispiel also auf Seiten des zweiten Teilnehmers 200 werden die Zusatzsymbole am MII durch eine Zusatzlogik wieder herausgefiltert.

Die zusätzlichen Datensymbole können nur eingeführt werden, wenn tatsächlich Telegrammverkehr vorliegt. Weil das aber nicht zwingend ist, werden bei ausbleibenden Telegrammen auf dem optischen Kanal sogenannte Microframes generiert, die nur die Daten des Zusatzkanals oder Zusatzinformationskanal transportieren.

Für den Fall des tatsächlichen Telegrammverkehrs werden die Ethernet-Telegramme wie folgt manipuliert. Die Ethernet-Telegramme 90 haben aufeinanderfolgend einen Mindestabstand der Länge von 32 Symbolen, der durch sogenannte Idle-Symbole gefüllt werden: Diese dienen der Synchronisation auf den tatsächlichen Telegrammanfang.

Auf Basis der Fast-Ethernet-Spezifikation IEEE 802.3 bezüglich der Telegrammpausen schlägt die Erfindung vor, zwei von minimal 32 Idle-Symbolen der Pause durch zwei zusätzliche Idle-Symbole zu ersetzen, die jeweils Information tragen. Damit werden je Ethernet-Telegramm 90 beispielsweise 4-Bit Symbole aus Daten des Zusatzkanals übertragen. Die Einfügemöglichkeiten sind theoretisch nicht uneingeschränkt anwendbar. Es kommt darauf an, die Zusatzinformation MII an den beabsichtigten Stellen einspeisen zu können und sie beim Empfang an diesem Ort im Frame wieder zu finden und zu entfernen. Die Zustandsmaschinen (Finite State Machines) der Ethernet-Controller (PHY) verschiedener Hersteller kontrollieren den optischen (FX-) Datenstrom verschieden streng. Nur wenn der Datenstrom des zweiten physikalischen Kanals, also beispielsweise des optischen Kanals, nicht physikalisch überwacht wird, toleriert der Controller die zusätzlichen Symbole. Es wurde jedoch festgestellt, dass die meisten Ethernet-Controller die Manipulation am Frame-Ende per Spezifikation zulassen und dass sie gegen die Unterschreitung der Minimalpause tolerant sind.

Praktisch wurden verschiedene Controller großer Hersteller getestet und die Anwendbarkeit der Methode bestätigt.

Möglich ist insbesondere, die zusätzlichen Datensymbole im Datenfeld einzufügen: Direkt vor dem CRC werden zwei Symbole ergänzt und die physische Sendefreigabe wird um die Dauer von zwei Symbolen verlängert. Wenn der Ethernet-Controller keine CRC Prüfung vornimmt, bemerkt er den scheinbaren CRC Fehler nicht. Allerdings würde er sowohl das Senden als auch den Empfang ohne die Längenmanipulation zu früh abbrechen.

Wenn der Hauptkanal inaktiv ist, also für den Fall, dass die Telegrammrate niedriger ist als der Übertragungsbedarf des Zusatzbedarfs oder dass der Telegrammverkehr völlig unterbrochen wird, können auch keine Symbole an zu übertragende Frames angehängt werden. In diesen Fällen werden auf dem zweiten physikalischen Kanal selbsttätig sogenannte Microframes gesendet. Diese Microframes beinhalten nur die notwendigsten Symbole für Synchronisation und Ende sowie die eigentlichen zusätzlichen Datensymbole und sind deshalb wesentlich kürzer als normale Ethernet-Frames oder Telegramme. Die Microframes dürfen nur eingefügt werden, wenn sichergestellt ist, dass genügend Zeit bis zum nächsten Ethernet-Telegramm bleibt. Innerhalb des Systems können auf diese Weise die Mindestpausen eingehalten werden. Deshalb wird in dem Microcontroller, also der Steuerungseinrichtung, ein Daten- oder Symbolpuffer angelegt, der die Größe eines Microframes samt zugehöriger Mindestpausenzeit hat und um dessen Länge alle Telegramme verzögert werden. Wenn der Puffer leer ist und die notwendige Wartezeit abgelaufen ist, wird dort ein Microframe eingespeist. Auf der Gegenseite wird ein empfangener Microframe als solcher erkannt, ausgewertet und kabelseitig durch Idle-Symbole ersetzt.

Zusammenfassend soll hervorgehoben werden, dass alle beschriebenen Manipulationen ausschließlich den Strom auf Seiten des zweiten physikalischen Kanals, beispielsweise des optischen Kanals betreffen, der also zwischen zwei speziellen aufeinander eingestellten Mediaconvertern verabredet ist. Teilnehmer am ersten physikalischen Kanal bemerken diesen Zusatzkanal nicht und müssen auch nicht darauf eingestellt werden. Das System ist dadurch komplett kompatibel zum Ethernet-Standard. Es tritt lediglich eine konstante Verzögerung des Telegrammstroms um die Pufferzeit für die Microframes auf.

## Patentansprüche

1. Verfahren zur Datenübertragung zwischen zwei Teilnehmern (100, 200) auf Grundlage des Ethernet-Standards, bei dem
ein erstes Ethernet-Signal (12), welches ein Wandler (300) über einen ersten physikalischen Kanal (16) von einem ersten Teilnehmer (100) empfängt, von dem Wandler (300) in ein zweites Ethernet-Signal (74) umgewandelt wird, das von dem Wandler (300) über einen zweiten physikalischen Kanal (76) an einen zweiten Teilnehmer (200) gesendet wird,
wobei zum Bereitstellen eines Zusatzinformationskanals (98) zusätzliche Datensymbole (97) über den zweiten physikalischen Kanal (76) an den zweiten Teilnehmer (200) gesendet werden,
wobei beim Umwandeln des ersten Ethernet-Signals (12) in das zweite Ethernet-Signal (74) die zusätzlichen Datensymbole (97) in die Telegramme (90) des zweiten Ethernet-Signals (74) eingefügt werden oder an diese Telegramme (90) angehängt werden,
**dadurch gekennzeichnet,**
**dass** der Wandler (300) kontinuierlich prüft, ob eine Pause zwischen zwei aufeinanderfolgenden Ethernet-Telegrammen eine zulässige Höchstdauer überschreitet,
**dass** für die Fälle, in denen eine Pause die zulässige Höchstdauer überschreitet, von dem Wandler (300) auf dem zweiten physikalischen Kanal (76) Microframes gesendet werden, wobei zusätzliche Datensymbole (97) des Zusatzinformationskanals (98) in den Microframes enthalten oder an diese angehängt sind, und
**dass** der Wandler (300) vor dem Senden eines Microframes prüft, ob genügend Zeit bis zum nächsten Telegramm (90) des ersten Ethernet-Signals (12) bleibt und das ein Microframe mit zusätzlichen Datensymbolen (97) des Zusatzinformationskanals (98) nur gesendet wird, wenn bis zum nächsten Telegramm (90) des ersten Ethernet-Signals (12) genügend Zeit bleibt.

2. Verfahren nach Anspruch 1,
**dadurch gekennzeichnet,**
**dass** ein drittes Ethernet-Signal (72), das der Wandler (300) von dem zweiten Teilnehmer (200) über den zweiten physikalischen Kanal (76) empfängt, von dem Wandler (300) in ein viertes Ethernet-Signal (14) umgewandelt wird, das von dem Wandler (300) über den ersten physikalischen Kanal (16) an den ersten Teilnehmer (100) gesendet wird, und
**dass** zusätzliche Datensymbole (97), die in Telegrammen (90) oder Microframes des dritten Ethernet-Signals (72) enthalten oder an diese Telegramme (90) oder Microframes angehängt sind, beim Umwandeln des dritten Ethernet-Signals (72) in das vierte Ethernet-Signal (14) herausgefiltert werden, bevor das vierte Ethernet-Signal (14) an den ersten Teilnehmer (100) gesendet wird.

3. Verfahren nach Anspruch 1 oder 2,
**dadurch gekennzeichnet,**
**dass** die zusätzlichen Datensymbole (97)
(a) in den Datenfeldern (94) der Telegramme (90) des zweiten Ethernet-Signals (12) eingefügt werden und/oder
(b) in die Präambel (92) der Telegramme (90) des zweiten Ethernet-Signals (12) eingefügt werden und/oder
(c) zwischen einem CRC-Feld (95) und einem ESD-Feld (96) der Telegramme (90) des zweiten Ethernet-Signals (12) eingefügt werden
(d) und/oder nach dem ESD-Feld (94) der Telegramme (90) des zweiten Ethernet-Signals (12) angehängt werden.

4. Verfahren nach einem der Ansprüche 1 bis 3,
**dadurch gekennzeichnet,**
**dass** 2 von minimal 32 IDLE-Symbolen der Telegrammpausen (36) durch zusätzliche Datensymbole (96) des Zusatzinformationskanals (98) ersetzt werden.

5. Verfahren nach einem der Ansprüche 1 bis 4,
**dadurch gekennzeichnet,**
**dass** der erste physikalische Kanal (16) und/oder der zweite physikalische Kanal (76) ein elektrischer Übertragungskanal, ein optischer Übertragungskanal, insbesondere ein lichtleitergebundener Übertragungskanal oder ein Übertragungskanal in der Art einer Datenlichtschranke, oder ein Funkübertragungskanal ist.

6. Verfahren nach einem der Ansprüche 1 bis 5,
**dadurch gekennzeichnet,**
**dass** auf dem Zusatzinformationskanal (98) Informationen über eine Notausschaltung und/oder über eine über den zweiten physikalischen Kanal (76) von der zweiten Anschlusseinrichtung (70) empfangene Sendeleistung an den zweiten Teilnehmer (200) gesendet werden.

7. Wandler zum Senden und Empfangen von Daten auf Grundlage des Ethernet-Standards,
mit einer ersten Anschlusseinrichtung (10) zum Herstellen einer Wirkverbindung mit einem ersten physikalischen Kanal (16),
mit einem ersten Empfänger (30), der mit der ersten Anschlusseinrichtung (10) verbunden ist, zum Empfangen eines ersten Ethernet-Signals (12),
mit einer ersten Schnittstelle (40), die mit dem ersten Empfänger (30) verbunden ist, zum Umwandeln des ersten Ethernet-Signals (12) in ein zweites Ethernet-Signal (74),
mit einem ersten Sender (60), der mit der ersten Schnittstelle (40) verbunden ist, zum Aussenden des zweiten Ethernet-Signals (74) auf einen zweiten physikalischen Kanal (76),
mit einer zweiten Anschlusseinrichtung (70), die mit dem ersten Sender (60) verbunden ist, zum Herstellen einer Wirkverbindung mit dem zweiten physikalischen Kanal (76)
**dadurch gekennzeichnet,**
**dass** eine Steuereinrichtung (80) vorhanden ist, die mit der ersten Schnittstelle (40) zusammenwirkt und die dazu eingerichtet ist, zusätzliche Datensymbole (97) in die Telegramme (90) des zweiten Ethernet-Signals (74) einzufügen oder an die Telegramme (90) des zweiten Ethernet-Signals (74) anzuhängen, um einen Zusatzinformationskanal (98) bereitzustellen,
**dass** in der Steuereinrichtung (80) ein Datenpuffer (82) vorhanden ist, in welchen über den zweiten physikalischen Kanal (76) zu sendende Daten vor dem Senden einlesbar sind zum Feststellen, ob für das Einfügen eines Microframes mit zusätzlichen Datensymbolen (97) des Zusatzinformationskanals (98) hinreichend Zeit zur Verfügung steht, und
**dass** der Datenpuffer (82) mindestens die Größe eines Microframes zuzüglich einer Mindestpausenzeit aufweist.

8. Wandler nach Anspruch 7,
**dadurch gekennzeichnet,**
**dass** ein zweiter Empfänger (50) vorhanden ist, der mit der zweiten Anschlusseinrichtung (70) verbunden ist, zum Empfangen eines dritten Ethernet-Signals (72),
**dass** eine zweite Schnittstelle (41) vorhanden ist, die mit dem zweiten Empfänger (50) verbunden ist, zum Umwandeln des dritten Ethernet-Signals (72) in ein viertes Ethernet-Signal (14),
wobei die Steuereinrichtung (80) mit der zweiten Schnittstelle (41) und/oder der zweiten Anschlusseinrichtung (70) zusammenwirkt und dazu eingerichtet ist, in dem dritten Ethernet-Signal (72) enthaltene zusätzliche Datensymbole (97) herauszufiltern, und
**dass** ein zweiter Sender (20) vorhanden ist, der mit der ersten Anschlusseinrichtung (10) und der zweiten Schnittstelle (41) verbunden ist, zum Senden des vierten Ethernet-Signals (14) über den ersten physikalischen Kanal (16).

9. Wandler nach einem der Ansprüche 7 oder 8,
**dadurch gekennzeichnet,**
**dass** die erste Schnittstelle (40) und/oder die zweite Schnittstelle (41) eine MII-Schnittstelle ist.

10. Datenübertragungsstrecke zum Übertragen von Daten zwischen einem ersten Teilnehmer (100) und einem zweiten Teilnehmer (200)
mit einem ersten Wandler (300) nach einem der Ansprüche 7 bis 9 zum Bereitstellen einer Kommunikationsverbindung zwischen dem ersten physikalischen Kanal (16) und dem zweiten physikalischen Kanal (76) und einem zweiten Wandler (400) nach einem der Ansprüche 7 bis 9 zum Bereitstellen einer Kommunikationsverbindung zwischen einem dritten physikalischen Kanal (76) und dem zweiten physikalischen Kanal (17).

11. Datenübertragungsstrecke nach Anspruch 10,
**dadurch gekennzeichnet,**
**dass** der erste physikalische Kanal (16) und der dritte physikalische Kanal (17) gleiche physikalische Kanäle sind, insbesondere elektrische kabelgebundene Übertragungskanäle sind.

12. Datenübertragungsstrecke nach Anspruch 10 oder 11,
**dadurch gekennzeichnet,**
**dass** der zweite physikalische Kanal (76) ein optischer Übertragungskanal ist und dass die zweite Anschlusseinrichtung (70) des ersten Wandlers (300) und die zweite Anschlusseinrichtung (71) des zweiten Wandlers (400) jeweils einen Lichtsender (84, 85) und einen Lichtempfänger (86, 87) aufweisen.

13. Datenübertragungsstrecke nach einem der Ansprüche 10 bis 12,
**dadurch gekennzeichnet,**
**dass** durch die zweite Anschlusseinrichtung (70) des ersten Wandlers (300) und die zweite Anschlusseinrichtung (71) des zweiten Wandlers (400) eine Datenlichtschranke (700) gebildet ist.

## Claims

1. Method for data transmission between two subscribers (100, 200) based on the Ethernet standard, wherein
a first Ethernet signal (12), which a converter (300) receives over a first physical channel (16) from a first subscriber (100), is converted by the converter (300) into a second Ethernet signal (74), which is transmitted by the converter (300) over a second physical channel (76) to a second subscriber (200),
wherein, for the provision of an additional information channel (98), additional data symbols (97) are transmitted over the second physical channel (76) to the second subscriber (200),
wherein, during the conversion of the first Ethernet signal (12) into the second Ethernet signal (74), the additional data symbols (97) are inserted into the telegrams (90) or attached to these telegrams (90),
**characterised in that**
the converter (300) continuously checks whether a pause between two successive Ethernet telegrams exceeds an admissible maximum duration,
in cases in which a pause exceeds the admissible maximum duration, microframes are transmitted by the converter (300) on the second physical channel (76), wherein additional data symbols (97) of the additional information channel (98) are contained in the microframes or attached to the microframes, and
the converter (300) checks, prior to transmitting a microframe, whether there is sufficient time remaining until the next telegram (90) of the first Ethernet signal (12), and a microframe with additional data symbols (97) of the additional information channel (98) is only transmitted if there is sufficient time remaining until the next telegram (90) of the first Ethernet signal (12).

2. Method according to claim 1,
**characterised in that**
a third Ethernet signal (72), which the converter (300) receives from the second subscriber (200) over the second physical channel (76), is converted by the converter (300) into a fourth Ethernet signal (14), which is transmitted by the converter (300) over the first physical channel (16) to the first subscriber (100), and
additional data symbols (97) contained in the telegrams (90) or microframes of the third Ethernet signal (72) or attached to these telegrams (90) or microframes are filtered out, during the conversion of the third Ethernet signal (72) into the fourth Ethernet signal (14), before the fourth Ethernet signal (14) is transmitted to the first subscriber (100).

3. Method according to claim 1 or 2,
**characterised in that**
the additional data symbols (97)
(a) are inserted in the data fields (94) of the telegrams (90) of the second Ethernet signal (12) and / or
(b) are inserted into the preambles (92) of the telegrams (90) of the second Ethernet signal and / or
(c) are inserted between a CRC field (95) and an ESD field (96) of the telegrams (90) of the second Ethernet signal (12),
(d) and / or are attached after the ESD field (94) of the telegrams (90) of the second Ethernet signal (12).

4. Method according to one of claims 1 to 3,
**characterised in that**
2 of a minimum of 32 IDLE symbols of the telegram pauses (36) are replaced by additional data symbols (96) of the additional information channel (98).

5. Method according to one of claims 1 to 4,
**characterised in that**
the first physical channel (16) and / or the second physical channel (76) is an electric transmission channel, an optical transmission channel, in particular an optical fibre-based transmission channel or a transmission channel in the manner of a data light barrier, or a radio transmission channel.

6. Method according to one of claims 1 to 5,
**characterised in that**
information on an emergency power off and / or on a transmission power received over the second physical channel (76) by the second terminal means (70) is transmitted on the additional information channel (98) to the second subscriber (200).

7. Converter for transmitting and receiving data based on the Ethernet standard, having
a first terminal means (10) for producing an operative connection with a first physical channel (16),
a first receiver (30) connected to the first terminal means (10) for receiving a first Ethernet signal (12),
a first interface (40) connected to the first receiver (30) for converting the first Ethernet signal (12) into a second Ethernet signal (74),
a first transmitter (60) connected to the first interface (40) for emitting the second Ethernet signal (74) to a second physical channel (76),
a second terminal means (70) connected to the first transmitter (60) for producing an operative connection with the second physical channel (76), **characterised in that**
there is a control means (80), which cooperates with the first interface (40) and which is adapted to insert additional data symbols (97) into the telegrams (90) of the second Ethernet signal (74) or to attach them to the telegrams (90) of the second Ethernet signal (74) in order to provide an additional information channel (98),
there is a data buffer (82) in the control means (80), into which data to be transmitted over the second physical channel (76) can be read prior to transmission, in order to determine whether there is sufficient time available to insert a microframe with additional data symbols (97) of the additional information channel (98), and
the data buffer (82) has at least the size of a microframe plus a minimum pause time.

8. Converter according to claim 7,
**characterised in that**
there is a second receiver (50), which is connected to the second terminal means (70), for receiving a third Ethernet signal (72),
there is a second interface (41), which is connected to the second receiver (50), for converting the third Ethernet signal (72) into a fourth Ethernet signal (14),
wherein the control means (80) cooperates with the second interface (41) and / or with the second terminal means (70) and is adapted to filter out additional data symbols (97) contained in the third Ethernet signal (72), and
there is a second transmitter (20), which is connected to the first terminal means (10) and to the second interface (41), for transmitting the fourth Ethernet signal (14) over the first physical channel (16).

9. Converter according to one of claims 7 or 8,
**characterised in that**
the first interface (40) and / or the second interface (41) is a Mil interface.

10. Data transmission path for transmitting data between a first subscriber (100) and a second subscriber (200), having
a first converter (300) according to one of claims 7 to 9 for providing a communication link between the first physical channel (16) and the second physical channel (76), and a second converter (400) according to one of claims 7 to 9 for providing a communication link between a third physical channel (76) and the second physical channel (17).

11. Data transmission path according to claim 10,
**characterised in that**
the first physical channel (16) and the third physical channel (17) are the same physical channels, in particular electric wired transmission channels.

12. Data transmission path according to claim 10 or 11,
**characterised in that**
the second physical channel (76) is an optical transmission channel and the second terminal means (70) of the first converter (300) and the second terminal means (71) of the second converter (400) respectively have a light transmitter (84, 85) and a light receiver (86, 87).

13. Data transmission path according to one of claims 10 to 12,
**characterised in that**
a data light barrier (700) is formed by the second terminal means (70) of the first converter (300) and the second terminal means (71) of the second converter (400).

## Revendications

1. Procédé de transmission de données entre deux participants (100, 200) sur la base de la norme Ethernet, selon lequel
un premier signal Ethernet (12), qu'un convertisseur (300) reçoit par le biais d'un premier canal physique (16) d'un premier participant (100), est converti par le convertisseur (300) en un deuxième signal Ethernet (74) qui est émis par le convertisseur (300) par le biais d'un deuxième canal physique (76) vers un second participant (200),
dans lequel pour la fourniture d'un canal d'information supplémentaire (98) des symboles de données supplémentaires (97) sont émis par le biais du deuxième canal physique (76) vers le second participant (200), dans lequel, lors de la conversion du premier signal Ethernet (12) en le deuxième signal Ethernet (74), les symboles de données supplémentaires (97) sont insérés dans les télégrammes (90) du deuxième signal Ethernet (74) ou sont adjoints à ces télégrammes (90),
**caractérisé en ce**
**que** le convertisseur (300) vérifie continuellement si une pause entre deux télégrammes Ethernet successifs dépasse une durée maximale admissible,
**que**, pour les cas dans lesquels une pause dépasse la durée maximale admissible, des microtrames sont émises par le convertisseur (300) sur le deuxième canal physique (76), des symboles de données supplémentaires (97) du canal d'information supplémentaire (98) étant contenus dans les microtrames ou adjoints à celles-ci, et
**que** le convertisseur (300) vérifie avant l'émission d'une microtrame s'il reste suffisamment de temps jusqu'au prochain télégramme (90) du premier signal Ethernet (12) et en ce qu'une microtrame est émise avec des symboles de données supplémentaires (97) du canal d'information supplémentaire (98) uniquement s'il reste suffisamment de temps jusqu'au prochain télégramme (90) du premier signal Ethernet (12).

2. Procédé selon la revendication 1,
**caractérisé en ce**
**qu'**un troisième signal Ethernet (72), que le convertisseur (300) reçoit du second participant (200) par le biais du deuxième canal physique (76), est converti par le convertisseur (300) en un quatrième signal Ethernet (14) qui est émis par le convertisseur (300) par le biais du premier canal physique (16) vers le premier participant (100), et que des symboles de données supplémentaires (97), qui sont contenus dans des télégrammes (90) ou des microtrames du troisième signal Ethernet (72) ou sont adjoints à ces télégrammes (90) ou ces microtrames, sont éliminés par filtrage lors de la conversion du troisième signal Ethernet (72) en le quatrième signal Ethernet (14) avant que le quatrième signal Ethernet (14) soit émis vers le premier participant (100).

3. Procédé selon la revendication 1 ou 2,
**caractérisé en ce**
**que** les symboles de données supplémentaires (97)
(a) sont insérés dans les champs de données (94) des télégrammes (90) du deuxième signal Ethernet (12) et/ou
(b) sont insérés dans les préambules (92) des télégrammes (90) du deuxième signal Ethernet (12) et/ou
(c) sont insérés entre un champ CRC (95) et un champ ESD (96) des télégrammes (90) du deuxième signal Ethernet (12)
(d) et/ou sont adjoints après le champ ESD (94) des télégrammes (90) du deuxième signal Ethernet (12).

4. Procédé selon l'une quelconque des revendications 1 à 3,
**caractérisé en ce**
**que** 2 d'au moins 32 symboles IDLE des pauses de télégramme (36) sont remplacés par des symboles de données supplémentaires (96) du canal d'information supplémentaire (98).

5. Procédé selon l'une quelconque des revendications 1 à 4,
**caractérisé en ce**
**que** le premier canal physique (16) et/ou le deuxième canal physique (76) est un canal de transmission électrique, un canal de transmission optique, en particulier un canal de transmission lié à un guide de lumière ou un canal de transmission à la manière d'une barrière lumineuse de données, ou un canal de transmission radioélectrique.

6. Procédé selon l'une quelconque des revendications 1 à 5,
**caractérisé en ce**
**que**, sur le canal d'information supplémentaire (98), des informations concernant une coupure d'urgence et/ou une puissance d'émission reçue par le second système de branchement (70) par le biais du deuxième canal physique (76) sont émises vers le second participant (200).

7. Convertisseur pour l'émission et la réception de données sur la base de la norme Ethernet,
avec un premier système de branchement (10) pour l'établissement d'une liaison active avec un premier canal physique (16),
avec un premier récepteur (30), qui est relié au premier système de branchement (10), pour la réception d'un premier signal Ethernet (12), avec une première interface (40), qui est reliée au premier récepteur (30), pour la conversion du premier signal Ethernet (12) en un deuxième signal Ethernet (74),
avec un premier émetteur (60), qui est relié à la première interface (40), pour l'émission du deuxième signal Ethernet (74) sur un deuxième canal physique (76),
avec un second système de branchement (70), qui est relié au premier émetteur (60), pour l'établissement d'une liaison active avec le deuxième canal physique (76)
**caractérisé en ce**
**qu'**est présent un système de commande (80) qui coopère avec la première interface (40) et qui est conçu pour insérer des symboles de données supplémentaires (97) dans les télégrammes (90) du deuxième signal Ethernet (74) ou les adjoindre aux télégrammes (90) du deuxième signal Ethernet (74), pour fournir un canal d'information supplémentaire (98),
**que** dans le système de commande (80) une mémoire tampon de données (82) est présente, dans laquelle par le biais du deuxième canal physique (76) des données à émettre sont lisibles avant l'émission pour déterminer si suffisamment de temps est disponible pour l'insertion d'une microtrame avec des symboles de données supplémentaires (97) du canal d'information supplémentaire (98), et que la mémoire tampon de données (82) présente au moins la taille d'une microtrame en plus d'un temps de pause minimal.

8. Convertisseur selon la revendication 7,
**caractérisé en ce**
**qu'**est présent un second récepteur (50), qui est relié au second système de branchement (70), pour la réception d'un troisième signal Ethernet (72),
en ce qu'est présente une seconde interface (41) qui est reliée au second récepteur (50), pour la conversion du troisième signal Ethernet (72) en un quatrième signal Ethernet (14),
dans lequel le système de commande (80) coopère avec la seconde interface (41) et/ou le second système de branchement (70) et est conçu pour éliminer par filtrage des symboles de données supplémentaires (97) contenus dans le troisième signal Ethernet (72), et
**qu'**est présent un second émetteur (20) qui est relié au premier système de branchement (10) et à la seconde interface (41), pour l'émission du quatrième signal Ethernet (14) par le biais du premier canal physique (16).

9. Convertisseur selon l'une quelconque des revendications 7 ou 8,
**caractérisé en ce**
**que** la première interface (40) et/ou la seconde interface (41) est une interface MII.

10. Voie de transmission de données pour la transmission de données entre un premier participant (100) et un second participant (200) avec un premier convertisseur (300) selon l'une quelconque des revendications 7 à 9 pour la fourniture d'une liaison de communication entre le premier canal physique (16) et le deuxième canal physique (76) et un second convertisseur (400) selon l'une quelconque des revendications 7 à 9 pour la fourniture d'une liaison de communication entre un troisième canal physique (76) et le deuxième canal physique (17).

11. Voie de transmission de données selon la revendication 10,
**caractérisée**
**en ce que** le premier canal physique (16) et le troisième canal physique (17) sont des canaux physiques identiques, en particulier des canaux de transmission électriques liés à un câble.

12. Voie de transmission de données selon la revendication 10 ou 11,
**caractérisée en ce**
**que** le deuxième canal physique (76) est un canal de transmission optique et que le deuxième système de branchement (70) du premier convertisseur (300) et le second système de branchement (71) du second convertisseur (400) comprennent chacun un émetteur optique (84, 85) et un récepteur optique (86, 87).

13. Voie de transmission de données selon l'une quelconque des revendications 10 à 12,
**caractérisée en ce**
**qu'**une barrière lumineuse de données (700) est formée par le second système de branchement (70) du premier convertisseur (300) et par le second système de branchement (71) du second convertisseur (400).
